# DEMANDE DE BREVET EUROPEEN

(11) **EP 2 135 534 A1**
(43) Date de publication de la demande: **23.12.2009**
(21) Numéro de dépôt: 09162722.4
(22) Date de dépôt: 15.06.2009
(51) Int. Cl.: A47J 31/36

(54) **Appareil électroménager de production de boissons à deux têtes d'infusion**

(30) Priorité: 19.06.2008 FR 0854068
(71) Demandeur: Seb SA, 69130 Ecully (FR)
(72) Inventeur: Diore, Christian, 14610 CAIRON (FR); Turpin, Romain, 14210 SAINT HONORINE DU FAY (FR); Launay, Gérard, 14190 CAUVICOURT (FR)
(74) Mandataire: Lemoine, Jean-Sébastien

(57) **Abrégé**

L'invention concerne un appareil de production de boissons à deux têtes d'infusion, comportant un dispositif adapté à alimenter de façon sélective les deux têtes, et un système électronique de contrôle.

Selon l'invention, le système électronique commande le fonctionnement du dispositif de distribution selon une première phase d'ouverture des capsules lors de laquelle chaque tête est alimentée successivement et exclusivement pendant une durée (D1, D2) suffisante pour que la totalité du flux d'eau passe par la capsule correspondante, suivie d'une seconde phase d'extraction lors de laquelle le dispositif de distribution passe de façon cyclique de l'un à l'autre de deux états d'ouverture pendant lesquels une seule tête est alimentée, la durée de chacun de ces deux états étant suffisamment courte pour permettre un écoulement en sortie de chaque tête sans interruption du flux.

## Description

La présente invention concerne un appareil électroménager de production de boissons à deux têtes d'infusion, et plus précisément un appareil fonctionnant avec des capsules dosées pour la réalisation des boissons.

On connaît un tel appareil du type comportant un dispositif de production d'eau chaude sous pression, un dispositif de distribution qui est adapté à alimenter de façon sélective les deux têtes d'infusion en eau chaude sous pression, un système électronique de contrôle qui est relié aux dispositifs de production et de distribution et qui est adapté à commander leur fonctionnement, et un dispositif d'activation de la production de boisson par les deux têtes d'infusion qui est relié au système électronique et qui est adapté à lui transmettre un signal d'initialisation de l'alimentation des deux têtes.

Un tel appareil est divulgué par le document EP 1 719 439. De façon plus précise, dans cet appareil qui est destiné à fonctionner avec des dosettes souples, suite à la réception du signal d'initialisation, le système électronique de contrôle commande le fonctionnement du dispositif de distribution d'eau en alimentant en eau chaude, sous une pression d'environ 2 bars, de façon alternée chacune des deux têtes, et de préférence, à chaque changement de tête, en arrêtant pendant un cours instant l'alimentation des deux têtes.

Un tel appareil est adapté aux dosettes souples pour lesquelles la pression délivrée est faible (environ 2 bars), mais il ne convient pas aux dosettes sous forme de capsule rigide, du fait notamment de la nécessité de fournir de l'eau ayant une pression d'au moins 5 bars, et pouvant atteindre 20 bars.

La présente invention vise à réaliser un appareil électroménager de production de boissons à deux têtes d'infusion pouvant permettre la réalisation simultanée de deux boissons en utilisant des capsules rigides.

Selon l'invention, dans l'appareil du type précité, suite à la réception du signal d'initialisation, le système électronique de contrôle commande le fonctionnement du dispositif de distribution d'eau selon une première phase d'ouverture des capsules lors de laquelle, à partir d'un état fermé dans lequel aucune tête n'est alimentée, le dispositif de distribution d'eau alimente successivement et exclusivement chaque tête d'infusion pendant une durée suffisante pour que la totalité du flux d'eau passe par la capsule correspondante et permette l'ouverture de cette dernière, suivie d'une seconde phase d'extraction lors de laquelle le dispositif de distribution d'eau passe de façon cyclique de l'un à l'autre de deux états d'ouverture simple pendant lesquels une seule tête d'infusion est alimentée, la durée de chacun de ses deux états étant suffisamment courte pour permettre un écoulement de la boisson en sortie de chaque tête d'infusion sans interruption du flux.

Le fonctionnement en deux phases distinctes est particulièrement bien adapté aux capsules rigides. La phase d'ouverture permet d'ouvrir chaque capsule rigide par la pression de l'eau chaude indépendamment l'une de l'autre, comme dans un appareil permettant de réaliser une seule boisson. La phase d'extraction permet, quant à elle, de réaliser les deux boissons simultanément.

D'autres particularités et avantages apparaîtront dans la description d'un mode de réalisation donné à titre d'exemple non limitatif et illustré par les dessins mis en annexe dans lesquels :
La figure 1 est une illustration schématique des organes fonctionnels de l'appareil électroménager de production de boissons, et
La figure 2 est une illustration du fonctionnement du dispositif de distribution lors de la réalisation simultanée de deux boissons.

Un appareil électroménager de production de boissons conforme à la présente invention comprend deux têtes d'infusion 1, 2 disposées côte à côte ou l'une derrière l'autre. Chaque tête d'infusion 1, 2 comporte une chambre de réception d'une capsule 3 (en l'occurrence, une capsule rigide 3). Dans le présent mode de réalisation, chaque chambre de réception comporte d'une part un logement immobile réalisé dans le bâti de l'appareil, et un couvercle monté mobile entre une position ouverte permettant l'accès à la chambre, et une position fermée. Par ailleurs, la chambre comporte des ergots de perforation permettant de percer la capsule 3 lors de la fermeture du couvercle, ainsi qu'une conduite d'amenée d'eau alimentant la capsule 3 en eau, et une conduite d'évacuation 4 par laquelle est évacuée hors de l'appareil la boisson qui est réalisée par l'extraction du produit contenu dans la capsule 3 (par exemple, du café) par l'eau.

L'appareil comprend également un dispositif de production 5 qui est adapté à produire de l'eau chaude sous pression. Ce dispositif 5 comporte un réservoir d'eau 6, une pompe 7 et une chaudière 8. En l'occurrence, la pompe 7 est disposée entre le réservoir d'eau 6 et la chaudière 8. Dans le présent mode de réalisation, la pompe 7 permet de délivrer une eau sous une pression importante (entre 5 et 20 bars).

L'appareil comprend en outre un dispositif de distribution 9 qui est adapté à alimenter de façon sélective les deux têtes d'infusion 1, 2 en eau chaude sous pression produite par le dispositif de production 5. En l'occurrence, le dispositif de distribution 9 est formé par une électrovanne à trois voies 9 : une voie d'entrée 10 connectée au dispositif de production 5 (en l'occurrence, à la chaudière 8), et deux voies de sortie 11, 12, chaque voie de sortie étant connectée à une tête d'infusion 1, 2 (en l'occurrence, à la conduite d'amenée d'eau débouchant dans la chambre de réception de la capsule 3). Le dispositif de distribution 9 peut être dans un état fermé dans lequel aucune tête d'infusion 1,2 n'est alimentée (les deux voies 11, 12 de sortie sont fermées), dans un état d'ouverture double dans lequel les deux têtes d'infusion 1, 2 sont alimentées simultanément (les deux voies 11, 12 de sortie sont ouvertes), ou dans l'un des deux états d'ouverture simple dans lequel une seule tête d'infusion est alimentée (une voie de sortie est ouverte, l'autre est fermée).

L'appareil électroménager comprend en plus un système électronique de contrôle 13. Ce système électronique est relié au dispositif de production 5 et au dispositif de distribution 9, et il permet de commander leur fonctionnement.

L'appareil comprend en outre un système de commande. En l'occurrence, le système de commande comprend un dispositif d'activation de la production simultanée de deux boissons 14 (ici, un bouton de commande manuel). Ce dispositif d'activation double 14 est relié au système électronique de contrôle 13 et est adapté à lui transmettre un signal d'initialisation de l'alimentation des deux têtes 1, 2 quand il est activé.

Le système de commande comprend également, pour chaque tête 1, 2, un dispositif d'activation de la production d'une boisson par la tête d'infusion correspondante seule 15, 16 (ici, un bouton de commande manuel par tête). Ces dispositifs d'activation simples 15, 16 sont reliés au système électronique de contrôle 13 et sont adaptés à lui transmettre un signal d'initialisation de l'alimentation de la tête 1, 2 correspondante quand chacun d'eux est activé. Dans le présent mode de réalisation, le signal émis par un dispositif d'activation simple ne génère pas l'alimentation de la tête correspondante quand l'autre tête est déjà alimentée en eau.

Le système de commande comprend par ailleurs, pour chaque tête 1, 2, un dispositif d'arrêt de la production d'une boisson par la tête d'infusion correspondante 17, 18 (ici, un bouton de commande manuel par tête). Ces dispositifs d'arrêt unitaire 17, 18 sont reliés au système électronique de contrôle 13 et sont adaptés à lui transmettre un signal d'arrêt de l'alimentation de la tête 1, 2 correspondante quand chacun d'eux est activé. Dans le présent mode de réalisation, le signal d'arrêt fait que le système électronique de contrôle 13 soit passe d'une gestion de la réalisation de deux boissons simultanées à une gestion de la réalisation d'une seule boisson, soit passe d'une gestion de la réalisation d'une seule boisson à l'arrêt de la production de boisson, selon le cas.

Le système de commande comprend enfin un dispositif d'arrêt global 19 (ici, un bouton de commande manuel). Ce dispositif d'arrêt global 19 est relié au système électronique de contrôle 13 et est adapté à lui transmettre un signal d'arrêt de l'alimentation des deux têtes 1, 2 quand il est activé.

Par ailleurs, l'appareil comprend un dispositif de commande manuel de mise en marche (mise en tension) et d'arrêt (mise hors tension).

En utilisation, suite à l'activation du dispositif d'activation double 14, le système électronique de contrôle 13 reçoit un signal d'initialisation de l'alimentation des deux têtes 1, 2 et, en conséquence, commande le fonctionnement du dispositif de distribution 9 en deux phases : une phase d'ouverture des capsules 3 suivie d'une phase d'extraction du produit contenu dans les capsules 3.

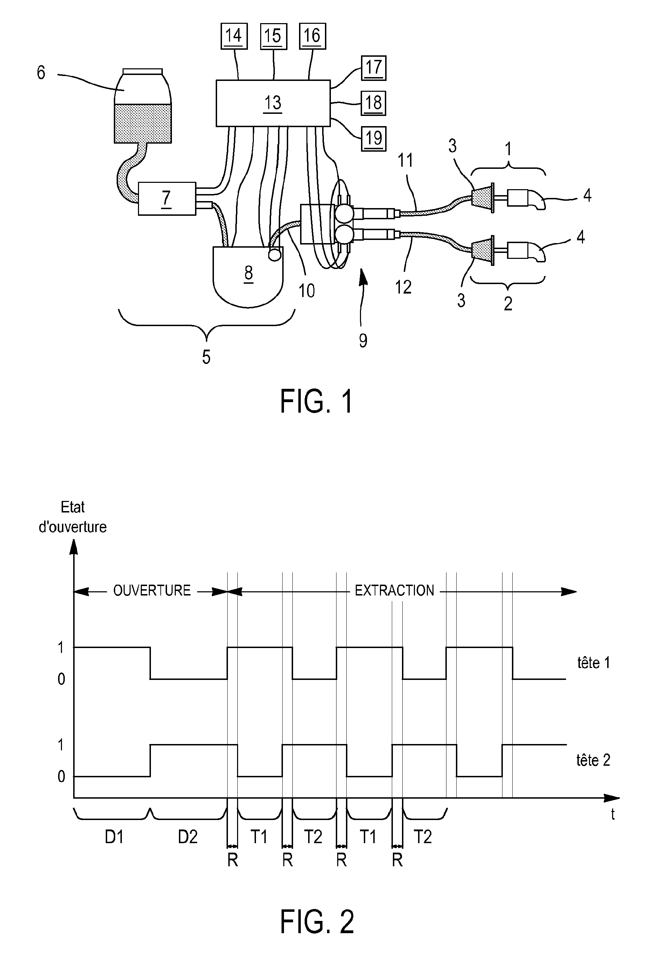

Dans la première phase d'ouverture, figure 2, à partir de son état fermé, le dispositif de distribution 9 alimente successivement et exclusivement chaque tête d'infusion 1, 2 pendant une durée D1, D2 suffisante pour que la totalité du flux d'eau passe par la capsule 3 correspondante et permette l'ouverture de cette dernière. De préférence, la durée D1, D2 pendant laquelle chaque tête d'infusion est alimentée est comprise entre 2 et 3 secondes, pour chaque tête. De ce fait, pendant cette phase, la totalité du flux d'eau est dirigée vers une seule capsule 3, l'une à la suite de l'autre, comme si une seule boisson était en cours de production. Ainsi, chaque capsule 3 est ouverte sous la pression de l'eau indépendamment l'une de l'autre, ce qui permet de bénéficier du fait que le maximum de l'extraction du produit d'une capsule se fait lors de l'ouverture de cette dernière, et ceci d'autant plus que la pression de l'eau est élevée. Dans le présent mode de réalisation, le dispositif de distribution 9 passe directement de l'alimentation exclusive de la première tête 1 à l'alimentation exclusive de la seconde 2. Dans cette phase, le dispositif de distribution 9 n'est qu'une seule fois dans ses deux états d'ouverture simple.

Dans la deuxième phase d'extraction, figure 2, le dispositif de distribution 9 passe de façon cyclique de l'un à l'autre de deux états d'ouverture simple, la durée de chacun de ses deux états T1, T2 étant suffisamment courte pour permettre un écoulement de la boisson en sortie de chaque tête d'infusion 1, 2 sans interruption du flux. De préférence, dans chaque cycle, la durée T1, T2 de chacun des deux états d'ouverture simple est comprise entre 0,75 et 1,25 secondes, (ici, environ 1 seconde). De ce fait, pendant cette phase, compte tenu des pertes de charge créées par chaque capsule 3, l'écoulement de chaque boisson par les conduites d'évacuation 4 est quasi constant, c'est-à-dire sans interruption. Ainsi, les deux boissons sont terminées (sensiblement) en même temps, ce qui évite le refroidissement de la première boisson pendant l'attente de la réalisation de la deuxième. De plus, chaque boisson a les mêmes propriétés que si elle avait été réalisée seule ; ainsi, deux cafés obtenus simultanément sont extraits avec la même pression, ont la même qualité de mousse, et aussi peu d'extrait sec que s'ils avaient été obtenus séparément.

En outre, dans la deuxième phase d'extraction, à chaque passage d'un état d'ouverture simple à l'autre, le dispositif de distribution 9 passe par un état d'ouverture double. De préférence, pour chaque changement d'état d'ouverture simple, la durée R pendant laquelle le dispositif de distribution d'eau reste dans son état d'ouverture double est comprise entre 0,1 et 0,2 seconde (ici, environ 0,15 seconde). Ce passage par l'état d'ouverture double est également présent lors du passage de la phase d'ouverture à la phase d'extraction. Ceci permet d'éviter les coups de bélier qui se produiraient sinon.

La deuxième phase se poursuit jusqu'à son arrêt commandé par le système électronique de contrôle 13, soit automatiquement (par exemple, due à une minuterie), soit après réception d'un signal provenant du système de commande (soit le dispositif d'arrêt global 19, soit l'un des deux dispositifs d'arrêt unitaire 17, 18).

Par ailleurs, en utilisation, suite à l'activation d'un dispositif d'activation simple 15, 16, le système électronique de contrôle 13 reçoit un signal d'initialisation de l'alimentation de la seule tête 1, 2 correspondante et, en conséquence, commande le passage du dispositif de distribution 9 dans son état d'ouverture simple correspondant. Il en est de même en cas d'activation d'un dispositif d'arrêt unitaire lors du procédé de réalisation simultanée de deux boissons. La réalisation de cette seule boisson se poursuit jusqu'à son arrêt commandé par le système électronique de contrôle 13, soit automatiquement (par exemple, due à une minuterie), soit après réception d'un signal provenant du système de commande (soit le dispositif d'arrêt global 19, soit le dispositif d'arrêt unitaire 17, 18 correspondant).

La présente invention permet également de réaliser une boisson complexe obtenue par l'extraction simultanée du contenu de deux capsules, avec une excellente homogénéité, par exemple du chocolat (ou du café) au lait, à partir d'une première capsule contenant du chocolat (ou du café), et d'une seconde contenant du lait.

Elle permet aussi de réaliser simultanément deux boissons ayant des niveaux d'extraction différents. Dans ce cas, soit le dispositif de distribution 9 alimente chaque tête d'infusion avec une même durée T1, T2 de chaque cycle pour les deux têtes d'infusion 1, 2, auquel cas, la boisson requérant le moins d'extraction est réalisée plus rapidement (ce qui nécessite l'arrêt prématuré de l'alimentation de la tête d'infusion correspondante), soit les deux têtes d'infusion ont chacune une durée T1, T2 qui lui est propre tenant compte de la difficulté de l'extraction de chaque cycle. Il peut en être de même des durées d'ouverture des capsules D1, D2.

## Revendications

1. Appareil électroménager de production de boissons à deux têtes d'infusion (1, 2), chaque tête d'infusion (1, 2) comportant une chambre de réception d'une capsule (3), l'appareil électroménager comportant un dispositif de production d'eau chaude sous pression (5), un dispositif de distribution (9) adapté à alimenter de façon sélective les deux têtes d'infusion (1, 2) en eau chaude sous pression, un système électronique de contrôle (13) relié aux dispositifs de production (5) et de distribution (9) et adapté à commander leur fonctionnement, et un dispositif d'activation (14) de la production simultanée de deux boissons par les deux têtes d'infusion (1, 2) qui est relié au système électronique de contrôle (13) et qui est adapté à lui transmettre un signal d'initialisation de l'alimentation des deux têtes (1, 2), **caractérisé en ce que**, suite à la réception du signal d'initialisation, le système électronique de contrôle (13) commande le fonctionnement du dispositif de distribution (9) selon une première phase d'ouverture des capsules (3) lors de laquelle, à partir d'un état fermé dans lequel aucune tête (1, 2) n'est alimentée, le dispositif de distribution (9) alimente successivement et exclusivement chaque tête d'infusion (1, 2) pendant une durée (D1, D2) suffisante pour que la totalité du flux d'eau passe par la capsule (3) correspondante et permette l'ouverture de cette dernière, suivie d'une seconde phase d'extraction lors de laquelle le dispositif de distribution (9) passe de façon cyclique de l'un à l'autre de deux états d'ouverture simple pendant lesquels une seule tête d'infusion (1, 2) est alimentée, la durée (T1, T2) de chacun de ces deux états étant suffisamment courte pour permettre un écoulement de la boisson en sortie de chaque tête d'infusion (1, 2) sans interruption du flux.

2. Appareil électroménager selon la revendication 1, **caractérisé en ce que** le système électronique de contrôle (13) commande le fonctionnement du dispositif de distribution (9) de sorte que, dans la phase d'ouverture, la durée (D1, D2) pendant laquelle chaque tête d'infusion (1, 2) est alimentée est comprise entre 2 et 3 secondes, pour chaque tête.

3. Appareil électroménager selon la revendication 1 ou 2, **caractérisé en ce que** le système électronique de contrôle (13) commande le fonctionnement du dispositif de distribution (9) de sorte que, dans la phase d'ouverture, le dispositif de distribution (9) passe directement de l'alimentation exclusive d'une tête à l'alimentation exclusive de l'autre.

4. Appareil électroménager selon l'une des revendications 1 à 3, **caractérisé en ce que** le système électronique de contrôle (13) commande le fonctionnement du dispositif de distribution (9) de sorte que, dans chaque cycle de la phase d'extraction, la durée (T1, T2) de chacun des deux états d'ouverture simple est comprise entre 0,75 et 1,25 secondes.

5. Appareil électroménager selon l'une des revendications 1 à 4, **caractérisé en ce que** le système électronique de contrôle (13) commande le fonctionnement du dispositif de distribution (9) de sorte que, dans la phase d'extraction, à chaque changement d'état d'ouverture simple, le dispositif de distribution (9) passe par un état d'ouverture double dans lequel les deux têtes d'infusion (1, 2) sont alimentées simultanément.

6. Appareil électroménager selon la revendication 5, **caractérisé en ce que** le système électronique de contrôle (13) commande le fonctionnement du dispositif de distribution (9) de sorte que, dans la phase d'extraction, pour chaque changement d'état d'ouverture simple, la durée (R) pendant laquelle le dispositif de distribution (9) reste dans son état d'ouverture double est comprise entre 0,1 et 0,2 seconde.

7. Appareil électroménager selon l'une des revendications 1 à 6, **caractérisé en ce que** le dispositif de production (5) comprend une pompe (7) permettant de fournir de l'eau sous une pression comprise entre 5 et 20 bars.

8. Appareil selon l'une des revendications 1 à 7, **caractérisé en ce qu'**il comprend, pour chaque tête d'infusion (1, 2), un dispositif d'arrêt unitaire (17, 18) qui est relié au système électronique de contrôle (13) et qui est adapté à transmettre à ce dernier un signal commandant l'arrêt de l'alimentation de la tête correspondante.

9. Appareil selon l'une des revendications 1 à 8, **caractérisé en ce qu'**il comprend, pour chaque tête, un dispositif d'activation simple (15, 16) qui est relié au système électronique de contrôle (13) et qui est adapté à lui transmettre un signal d'initialisation de l'alimentation de la tête correspondante seule.

10. Procédé de réalisation simultanée de deux boissons par un appareil électroménager de production de boissons à deux têtes d'infusion (1, 2), l'appareil comportant un dispositif de distribution (9) qui est adapté à alimenter de façon sélective les deux têtes d'infusion (1, 2) en eau chaude sous pression, un système électronique de contrôle (13) qui est relié à un dispositif de production (5) et au dispositif de distribution (9) et qui est adapté à commander leur fonctionnement, et un dispositif d'activation (14) de la production des deux boissons qui est relié au système électronique de contrôle (13), **caractérisé en ce que**, suite à la réception d'un signal d'initialisation émis par le dispositif d'activation double (14), le système électronique de contrôle (13) commande le fonctionnement du dispositif de distribution (9) selon une première phase d'ouverture des capsules lors de laquelle, à partir d'un état fermé dans lequel aucune tête n'est alimentée, le dispositif de distribution (9) alimente successivement et exclusivement chaque tête d'infusion (1, 2) pendant une durée suffisante pour que la totalité du flux d'eau passe par la capsule (3) correspondante et permette l'ouverture de cette dernière, suivie d'une seconde phase d'extraction lors de laquelle le dispositif de distribution (9) passe de façon cyclique de l'un à l'autre de deux états d'ouverture simple pendant lesquels une seule tête d'infusion (1, 2) est alimentée, la durée de chacun de ces deux états étant suffisamment courte pour permettre un écoulement de la boisson en sortie de chaque tête d'infusion (1, 2) sans interruption du flux.
